# EUROPÄISCHE PATENTANMELDUNG

(11) **EP 0 903 948 A2**
(43) Veröffentlichungstag der Anmeldung: **24.03.1999**
(21) Anmeldenummer: 98115731.6
(22) Anmeldetag: 20.08.1998
(51) Int. Cl.: H04Q 7/22, H04Q 7/32

(54) **Verfahren und Vorrichtung zur Signalverarbeitung in Sende-/Empfangseinheiten bei DECT**

(30) Priorität: 19.09.1997 DE 19741368
(71) Anmelder: SIEMENS AKTIENGESELLSCHAFT, 80333 München (DE)
(72) Erfinder: Kranz, Christian, 40885 Ratingen Lintorf (DE)

(57) **Zusammenfassung**

Zur Erhöhung der Datenübertragungsrate bei nach dem DECT-Standard arbeitenden Sende-/Empfangseinheiten ist vorgesehen, daß in mindestens einer der Sende-/Empfangseinheiten geprüft wird, ob ein Modemsignal vorliegt und ggf. in einen Modembetriebsmodus gewechselt wird.

## Beschreibung

Die Erfindung betrifft ein Verfahren und eine Vorrichtung zur Signalverarbeitung in Sende-/Empfangseinheiten bei DECT, wobei DECT für Digital Enhanced Cortless Telephon steht.

Eine Sende-/Empfangseinheit bei DECT kann ein Mobilteil oder eine Basisstation sein.

Das DECT-Netz ist ein mikrozellulares, digitales Mobilfunknetz für hohe Teilnehmerdichten. Es wird dabei ein TDMA-Verfahren (Time Devision Multiple Access) bei 10 Trägerfrequenzen verwendet. Diese liegen in einem Frequenzband von 1880 bis 1900 MHz. Ein nach dem DECT-Standard arbeitendes Schnurlostelefon empfängt einen Bitdatenstrom mit einer Bitrate von 1152 kbit/s als Informationssignal, das auch als Empfangsbitstrom bezeichnet wird. Daneben werden von dem Schnurlostelefon Daten mit einer Bitrate von ebenfalls 1152 kbit/s ausgesandt.

Die Kodierung von Sprachdaten zwischen zwei nach dem DECT-Standard arbeitenden Sende-/Empfangseinheiten wird in der Recommendation G.726 der ITU 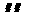 Adaptive Differential Pulse Code Modulation (abgekürzt ADPCM)" vorgeschrieben. Im der Recommendation G.726 wird beschrieben, wie eine Umsetzung eines 64 kbit/s pulscodemodulierten (PCM)-Kanals und eine lineare 8kHz Pulscodemodulation in einen 40, 32, 24 oder 16 kbit/s-Kanal und umgekehrt erfolgen soll. Die Konvertierung des PCM-Bitstroms erfolgt mit einer ADPCM-Datenumsetzungstechnik. Die Beziehung zwischen den Sprachfrequenzsignalen und den PCM-Codierungs-/Decodierungsregeln ist in der Recommendation G.711 der ITU beschrieben.

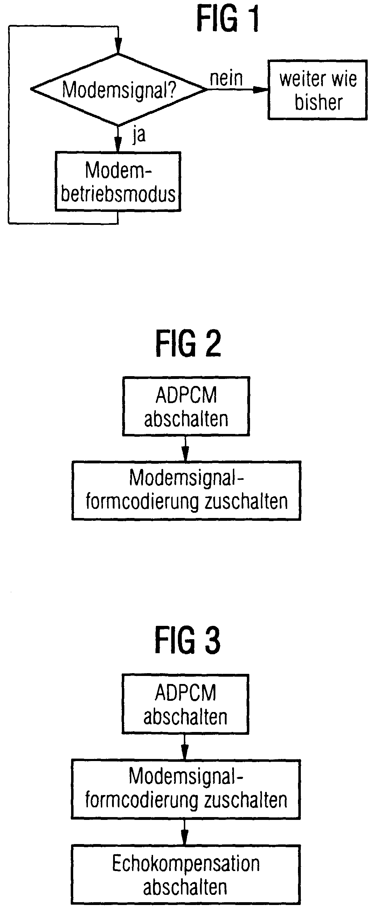

Die Funktionsweise des ADPCM-Codierers und Decodierers ist als Blockdiagramm in Figur 1 der Recommendation G.726 gezeigt und wird auf den Seiten 2 bis 13 der Recommendation G.726 umfassend beschrieben. Im folgenden wird deshalb auf die ADPCM-Funktionsweise nicht weiter eingegangen. Details sind dem Standard G.726 zu entnehmen.

Möchte man ein Modemsignal über Sende-/Empfangseinheiten, die nach dem DECT-Standard arbeiten, übertragen, so ist die Übertragungsrate bisher auf 9600 bit/s beschränkt.

Meist ist jedoch nur eine Übertragungsrate von 4800 bit/s erreichbar.

Unter dem Begriff Modem soll im gesamten Kontext eine Kombination aus Modulator und Demodulator verstanden werden. Ein Modem soll hier also sowohl die Funktionalität einer Faxeinrichtung nach den ITU-Richtlinien als auch die eines Modems beispielsweise nach dem ITU-Standart V.34 umfassen. Ein Modem gemäß der vorliegenden Definition kann Daten senden und auch Daten empfangen und zwar zeitgleich oder nacheinander.

Eine Aufgabe der Erfindung ist es, ein Verfahren und eine Vorrichtung anzugeben, mit dem beziehungsweise der höhere Übertragungsraten bei der Übertragung von Modemsignalen über Sende-/Empfangseinheiten, die nach dem DECT-Standard arbeiten, möglich sind.

Die Aufgabe wird durch ein Verfahren gemäß Patentanspruch 1 und Vorrichtungen gemäß den Patentansprüchen 15 und 16 gelöst.

So ist bei dem Verfahren vorgesehen, daß bei mindestens einer der Sende-/Empfangseinheiten geprüft wird, ob ein Modemsignal vorliegt, und falls ein Modemsignal vorliegt, in einen Modembetriebsmodus gewechselt wird.

Die erfindungsgemäße Vorrichtung weist eine Prüfeinheit in mindestens einer der Sende-/Empfangseinheiten auf, wobei die Prüfeinheit prüft, ob ein Modemsignal vorliegt. Weiterhin ist eine Verarbeitungseinheit vorgesehen, die der Prüfeinheit nachgeordnet ist und einen Wechsel in einem Modembetriebsmodus veranlaßt, falls ein Modemsignal vorliegt.

Eine weitere erfindungsgemäße Vorrichtung weist eine kombinierte Prüf- und Verarbeitungseinheit auf, die in mindestens einer der Sende-/Empfangseinheiten vorgesehen ist. Die Prüf- und Verarbeitungseinheit prüft, ob ein Modemsignal vorliegt und veranlaßt einen Wechsel in einen Modembetriebsmodus, falls ein Modemsignal vorliegt.

Vorteilhafte Weiterbildungen ergeben sich aus den abhängigen Ansprüchen.

So ist es beispielsweise von Vorteil, die adaptive differentielle Pulscodemodulation (ADPCM) abzuschalten, wenn ein Modemsignal vorliegt. Dadurch wird erreicht, daß ein Modem, welches vor Beginn der eigentlichen Datenübertragung die Leitungsqualität testet, keinen Leitungsqualitätsänderungen, bedingt durch ADPCM, unterworfen ist.

Um die Modemdatensignalrate weiter zu erhöhen, kann eine Modemsignalformcodierung zugeschaltet werden.

Um zu prüfen, ob ein Modemsignal vorliegt, kann ein von einem Modem stammendes Modempilottonsignal herangezogen werden.

Es besteht auch die Möglichkeit, das Spektrum des Sende- und/oder Empfangssignals zur Prüfung heranzuziehen, ob ein Modemsignal vorliegt.

Zur Prüfung, ob ein Modemsignal vorliegt, kann ein Signalstärkeverhältnis, das bei verschiedenen Frequenzen bewertet wird, herangezogen werden.

Schließlich besteht zur Prüfung, ob ein Modemsignal vorliegt, auch die Möglichkeit Pausen im Signal heranzuziehen.

Anstelle einer automatisierten Prüfung kann auch manuell in den Modembetriebsmodus gewechselt werden.

Die Sende-/Empfangseinheiten können auch selbständig, das heißt getrennt voneinander, prüfen, ob ein Modemsignal vorliegt.

Da es von Vorteil ist, daß sowohl die die Modemdaten aussendende Sende-/Empfangseinheit als auch die die Modemdaten empfangende Sende-/Empfangseinheit darüber informiert sind, daß ein Modemsignal übertragen werden soll, kann die Sende/Empfangseinheit, die ein Modemsignal detektiert hat, ein Steuersignal an die weitere Sende-/Empfangseinheit übermitteln, um anzuzeigen, daß ein Modemsignal detektiert wurde.

Es können auch beide Sende-/Empfangseinheiten ohne Austausch von Modeminformationen durch eine selbständige Detektion des Modemsignals in den Modembetriebsmodus wechseln.

Zusätzlich kann die Sende-/Empfangseinheit, die ein Modemsignal detektiert hat, ein Informationssignal an die weitere Sende-/Empfangseinheit übermitteln, um beispielsweise die Datenübertragungsrate einzustellen.

Die Übermittlung des Steuersignals und/oder des Informationssignals kann auf einem Mitteilungskanal oder einem transparenten Kanal erfolgen.

Die das Modemsignal über die Luftschnittstelle empfangende Sende-/Empfangseinheit kann so konfiguriert sein, daß sie nach Erhalt des Steuersignals oder durch eine selbständige Detektion des Modemsignals eine oder mehrere vom Inhalt des Steuersignals abhängige Aktionen ausführt.

Zur Verbesserung der Übertragung kann in der Sende-/Empfangseinheit, die das Modemsignal über die Luftschnittstelle empfängt, die Echounterdrückung abgeschaltet werden, wenn ein Modemsignal detektiert wurde.

Die Sende-/Empfangseinheit bzw. Sende-/Empfangseinheiten können mit einer Modemsignal-Codier-/Decodiereinheit versehen sein, die mit der Verarbeitungseinheit in Verbindung steht und im Modembetriebsmodus aktiv ist.

Die Erfindung wird anhand von drei Figuren weiter erläutert.
- Figur 1: zeigt in Form eines Blockdiagramms das erfindungsgemäße Verfahren zur Signalverarbeitung.
- Figur 2: zeigt einen Modembetriebsmodus, wie er im Mobilteil oder in der Basistation auftreten kann.
- Figur 3: zeigt einen Modembetriebsmodus, wie er in der Basistation auftreten kann.

Bei der Erfindung wird geprüft, ob ein Modemsignal, siehe Figur 1, vorliegt und falls dies nicht der Fall ist, kann wie bisher üblich weiterverfahren werden. Wird die Frage Modemsignal vorhanden jedoch mit ja beantwortet, so wird in einem Modembetriebsmodus umgeschaltet. Am Ende des Modemsignalübertragungsvorgangs wird wieder in den ursprünglichen Betriebsmodus gewechselt.

Beim Modembetriebsmodus gemäß Figur 2, welcher in der Sende-/Empfangseinheit auftritt, die das Modemsignal über die Luftschnittstelle aussendet und/oder empfängt, wird die adaptive differentielle Pulscodemodulation ADPCM abgeschaltet und ggf. eine auf das zu übertragende Modemsignal hin optimierte Modemsignalformcodierung zugeschaltet. Die Sende-/Empfangseinheit bei DECT kann eine Basisstation, ein Repeater oder ein Mobilteil sein.

Beim Modembetriebsmodus gemäß Figur 3 ist die Sende-/Empfangsstation üblicherweise die Basisstation, welche das Modemsignal über die Luftschnittstelle empfängt und/oder aussendet. Hier wird die adaptive differentielle Pulscodemodulation abgeschaltet, gegebenenfalls eine Modemsignalformcodierung zugeschaltet und zusätzlich die Echokompensation abgeschaltet. Ob die Abschaltung der Echokompensation zuletzt, zuerst oder zeitgleich mit der Abschaltung des ADPCM erfolgt, spielt keine Rolle.

Die Modemsignalformcodierung ist bezüglich des zu übertragenden Modemsignals und der Sende-/Empfangseinheiten, die nach dem DECT-Standard arbeiten, zu optimieren.

Üblicherweise sendet ein Modem vor Beginn der eigentlichen Datenübertragung ein Modempilottonsignal aus, anhand dessen eine nachgeordnete Einheit feststellen kann, daß demnächst mit der Modemsignaldatenübertragung begonnen wird. Dieses Modempilottonsignal kann für die Erfindung dazu herangezogen werden, zu prüfen, ob überhaupt ein Modemsignal vorliegt, oder ob es sich um ein anders geartetes Signal, beispielsweise ein Sprachsignal, handelt.

Zur Prüfung, ob ein Modemsignal vorliegt, kann das Spektrum des Sende- und/oder Empfangssignals herangezogen werden. Liegt ein annähernd rechteckigförmiges Signalspektrum vor, so kann daraus auf ein Modemsignal geschlossen werden. Andernfalls wird davon ausgegangen, daß kein Modemsignal vorliegt.

Es besteht auch die Möglichkeit aus dem Verhältnis der Amplituden des Signals bei verschiedenen Frequenzen auf die Signalherkunft zu schließen. Weicht beispielsweise die Amplitude des zu prüfenden Signals bei einer niedrigen Frequenz von der Amplitude bei einer höheren Frequenz deutlich ab, so wird es sich eher um ein Sprachsignal als um ein Modemsignal handeln.

Bei der Prüfung, ob ein Modemsignal vorliegt, können auch Signalpausen herangezogen werden.

Die einfachste und kostengünstigste Möglichkeit in den Modembetriebsmodus zu wechseln ist es, den Wechsel manuell anzustoßen. Dies kann beispielsweise durch Drücken eines Knopfes oder Schalters am jeweiligen Sende-/Empfangsgerät, durch das Verbinden des Modemkabels mit dem jeweiligen Sende-/Empfangsgerät oder durch Drücken einer bestimmten Tastenkombination am jeweiligen Sende-/Empfangsgerät erreicht werden.

Weiterhin ist es auch denkbar, daß in das Modem bereits eine Sende-/Empfangseinheit integriert ist, die nach dem DECT-Standard arbeitet. Ist dies der Fall, dann muß lediglich die zu dieser Sende-/Empfangseinheit korrespondierende Sende-/Empfangseinheit, meist die Basisstation, darüber informiert sein, ob ein Modemsignal übertragen werden soll. Dies kann beispielsweise dadurch geschehen, daß die im Modern integrierte Sende-/Empfangseinheit ein Steuersignal an die weitere Sende-/Empfangseinheit übermittelt, das anzeigt, daß ein Modemsignal übertragen werden soll. Daneben können selbstverständlich auch alle anderen bereits oben beschriebenen Verfahren zur Modemsignaldetektion herangezogen werden.

Die Übertragung des Steuersignals und ggf. des Informationssignals kann über einen Mitteilungskanal oder einen transparenten Kanal geschehen.

Das Informationssignal kann Informationen über die einzustellende Datenübertragungsrate beinhalten.

## Patentansprüche

1. Verfahren zur Signalverarbeitung in Sende-/Empfangseinheiten bei DECT,
bei dem in mindestens einer der Sende-/Empfangseinheiten geprüft wird, ob ein Modemsignal vorliegt,
bei dem, falls ein Modemsignal vorliegt, in einen Modembetriebsmodus gewechselt wird.

2. Verfahren nach Anspruch 1,
bei dem, falls ein Modemsignal vorliegt, ADPCM abgeschaltet wird.

3. Verfahren nach einem der Ansprüche 1 oder 2,
bei dem, falls ein Modemsignal vorliegt, eine Modemsignalformcodierung zugeschaltet wird.

4. Verfahren nach einem der Ansprüche 1 bis 3,
bei dem zur Prüfung, ob ein Modemsignal vorliegt, ein von einem Modem stammendes Modempilottonsignal herangezogen wird.

5. Verfahren nach einem der Ansprüche 1 bis 4,
bei dem zur Prüfung, ob ein Modemsignal vorliegt, das Spektrum des Sende- und /oder Empfangssignals herangezogen wird.

6. Verfahren nach Anspruch 5,
bei dem zur Prüfung, ob ein Modemsignal vorliegt, ein Frequenzverhältnis aus dem Sende- oder Empfangssignal herangezogen wird.

7. Verfahren nach einem der Ansprüche 1 bis 6,
bei dem zur Prüfung, ob ein Modemsignal vorliegt, die Signalpausen herangezogen werden.

8. Verfahren nach Anspruch 1,
bei dem an Stelle der Prüfung, ob ein Modemsignal vorliegt, manuell in den Modembetriebsmodus gewechselt wird.

9. Verfahren nach Anspruch 1,
bei dem die Sende-/Empfangseinheiten selbständig prüfen, ob ein Modemsignal vorliegt.

10. Verfahren nach einem der Ansprüche 1 bis 9,
bei dem durch die Sende-/Empfangseinheit, die ein Modemsignal detektiert hat, ein Steuersignal an die weitere Sende-/Empfangseinheit übermittelt wird, das anzeigt, daß ein Modemsignal detektiert wurde.

11. Verfahren nach Anspruch 10,
bei dem die Sende-/Empfangseinheit, die ein Modemsignal detektiert hat, ein Informationssignal an die weitere Sende-/Empfangseinheit übermittelt.

12. Verfahren nach einem der Ansprüche 10 oder 11,
bei dem das Steuersignal und/oder das Informationssignal auf einem Mitteilungskanal übermittelt werden.

13. Verfahren nach einem der Ansprüche 10 oder 11,
bei dem das Steuersignal und/oder das Informationssignal auf einem transparenten Kanal übermittelt werden.

14. Verfahren nach einem der Ansprüche 10 bis 13,
bei dem in der weiteren Sende-/Empfangseinheit nach Erhalt des Steuersignals eine oder mehrere vom Inhalt des Steuersignals abhängige Aktionen ausführt werden.

15. Verfahren nach einem der Ansprüche 10 bis 13,
bei dem in der weiteren Sende-/Empfangseinheit die Echounterdrückung abschaltet wird, wenn ein Modemsignal detektiert wurde.

16. Vorrichtung zur Signalverarbeitung in Sende-/Empfangseinheiten bei DECT,
mit einer Prüfeinheit in mindestens einer der Sende-/Empfangseinheiten, wobei die Prüfeinheit prüft, ob ein Modemsignal vorliegt,
mit einer Verarbeitungseinheit, welche der Prüfeinheit nachgeordnet ist und einen Wechsel in einen Modembetriebsmodus veranlaßt, falls ein Modemsignal vorliegt.

17. Vorrichtung zur Signalverarbeitung in Sende-/Empfangseinheiten bei DECT,
mit einer kombinierten Prüf- und Verarbeitungseinheit in mindestens einer der Sende-/Empfangseinheiten, wobei die Prüf- und Verarbeitungseinheit prüft, ob ein Modemsignal vorliegt und einen Wechsel in einen Modembetriebsmodus veranlaßt, falls ein Modemsignal vorliegt.

18. Vorrichtung nach Anspruch 16 oder 17,
mit einer Modemsignalcodier-/decodiereinheit, die mit der Verarbeitungseinheit in Verbindung steht und im Modembetriebsmodus aktiv ist.
